# EUROPEAN PATENT SPECIFICATION

(11) **EP 1 585 349 B1**
(45) Date of publication and mention of the grant of the patent: **12.03.2008**
(21) Application number: 04008261.2
(22) Date of filing: 05.04.2004
(51) Int. Cl.: H04Q 3/00

(54) **A method for transparent handling of a temporarily unaccessible database at a number portability server**
Verfahren zur transparenten Handhabung von vorübergehenden, unzugängigen Datenbanken in einem Nummernübertragbarkeitsserver
Méthode pour le traitement transparent d'une base de données temporairement inaccessible dans un serveur de portabilité de numéros

(43) Date of publication of application: 12.10.2005
(73) Proprietor: Nokia Siemens Networks GmbH & Co. KG, 81541 München (DE)
(72) Inventor: Schwarzbauer, Hanns Jürgen, Dr., 82194 Gröbenzell (DE); Serroyen, Gert, 2627 Schelle (BE); Verwimp, Gery, 2140 Borgerhout (BE)

(56) References cited:
- US-A- 6 101 494
- US-A- 6 137 806

## Description

### BACKGROUND

### Field of the Invention

The present invention relates to management of a number portability database and, more particularly, to the transparent handling of a temporarily unacessible database at a number portabilitiy server.

Related Information.

Telephone number portability is a service that provides residential and business telephone customers with the ability to retain, at the same location, their existing local telephone numbers when switching from one local telephone service provider to another. In addition to being convenient to the customer, number portability has been introduced by legislation in order to promote competition and reduce regulation in all telecommunications markets. Before that time, a major barrier to competition was the inability of customers to switch from one telephone company to another while retaining the same telephone number.

Therefore, due to regulatory requirements an E.164 telephone number could no longer be considered the "property" of a certain telephone company. A customer migrating from the telephone company he originally subscribed to another company within the same local area, is entitled to maintain his originally assigned E.164 number. E.164 is an ITU-T recommendation which defines the international public telecommunication numbering plan used in the PSTN and some other data networks. Therefore the telephone number alone could no longer serve as "routing" number in all circumstances.

Before setting up a call to the called party, it has to be ensured whether the called party is migrated to a different operator. This query is sent to and answered by e.g. a Number Portability Server (NBDB). The message is normally sent over an SS7 network using SCCP protocol. The SS7 standard and SCCP (SCCP Signalling Connection Control Part) protocol will not be discussed in detail here since these are well known in the art and easily. For the sake of this discussion, the OSI Open Systems Interconnect Communication Reference Model as defined by ISO will be discussed briefly here. The hardware and software functions of the SS7 protocol are divided into functional abstractions called "levels". These levels map loosely to the Open Systems Interconnect (OSI) 7-layer model defined by the International Standards Organization (ISO).

Generally, OSI is broken into two communication components. The first communication component, 'OSI Stack', accounts for the application layer through the transport layer as defined by OSI Communication Reference Model. The CMIP Toolkit sends and receives data to the OSI Stack. Upon receiving a request from the CMIP Toolkit the request to filtered down the protocol stack with each respective layer of the protocol stack adding it information to the message. Since the IIS implements RFC 1006, the OSI Stack sends/receives data to/from the network using TCP. Once the message gets down to the transport layer it is delivered using TCP. When the OSI stack receives a request from the TCP driver, it is passed up the stack and forwarded on to the CMIP Tool Kit.

The CMIP tool kit is a communication component implements the CMIP protocol. It provides an interface that is used by LNP applications to send/receive data. Upon receiving a message for delivery, the CMIP tool kit will perform whatever packaging it must perform and send the request to the OSI Stack. When the CMIP Tool Kit receives a message from the OSI Stack, the CMIP Tool kit either sends a notification to the LNP applications indicating data to available for reception or the LNP applications polls the CMIP Tool Kit. The Transaction Capabilities Applications Part (TCAP) supports the exchange of non-circuit related data between applications across the SS7 network using the SCCP connectionless service. Queries and responses sent between SSPs and SCPs are carried in TCAP messages.

It is critical that the response times from the NP server are short in order not to delay the call set-up. Problematically, the number of ported telephone numbers has risen dramatically and they are expected to increase. As a result, the liklihood that the addressed database is inaccessible due to congestion is likewise increasing. The inaccessibility may be compounded by management actions, such as synchronization with a master database or recovery operations. In any event, even a temporary overload situation can quickly escalate.

However, no adequate solution to congestion and overloading yet exists. Primarily, this is due to the fact that congestion control is proscribed by the ISO standards that govern the SCCP protocol, which leave little room to manage an overload situation at the SCCP side. More particularly, the recommendation for Congestion Control follows the "Flow Control" mechanism described in OSI Communication Reference Model (ISO/IEC 7498). Two types of flow control are defined as (1) Peer Flow Control and (2) Inter-Layer Flow Control.

Peer Flow Control can be used when two peer layers of the OSI Stack talk to each either. The most common form of Peer Flow Control is the sliding window protocol. This protocol is implemented by TCP. The sliding window protocol prevents the sender from over-running the destination by placing a limit on the number of unacknowledged messages that can be outstanding at one time. Inter-Layer Flow Control operates on the messages that are transmitted between each layer of the protocol stack. The lower layers of the OSI model will return an error to the caller when it has exceeded a resource limitation.

From the NPAC standpoint, these two mechanisms work as follows. When TCP encounters a condition where its sliding window is preventing the delivery of any new messages, TCP will STOP accepting any new messages. If a sender (in this case is the session layer) tries to send a message, TCP will return a resource limitation error. Eventually, the sender (again in this case the session layer) will reach a resource limitation because its queue of messages is too large and will have to return a resource limitation to its sender. This process proceeds up the stack until the CMIP Tool Kit is considered the sender.

When the CMIP Tool Kit receives a resource limitation error, it must either queue the message up or return the error to the LNP Application. If the message is queued-up, then a threshold must exist where the LNP Application will eventually be notified of the condition. Once the LNP Application receives this error message it will temporarily suspend delivery of the message and try again at a later time. How the try again later algorithm is implemented is left up to the each vendor. The key point is that the message in NOT dropped and delivery is suspended. What this means is the LNP Application will be ultimate holding reservoir.

Thus, the standard provides that the originating SCCP to handle the problem as already discussed. From the receiver's standpoint, no special processing is provided to handle congestion. If the receiving LNP Application is unable to process the request as fast as they can come in then the CMIP Toolkit on the receiver will back and eventually stop accepting new messages from the OSI stack. Likewise, the OSI stack will backup. Eventually, TCP will be unable to acknowledge new request. This will cause the senders TCP to become flow controlled. If the conditional continues, the LNP application will ultimately become suspended. When the problem is network related, the congestion is recognized since TCP uses the sliding window protocol. If the network is congested then the sender won't be receiving any TCP-level acknowledge signals from the destination. If the link becomes congested during recovery, the NPAC adheres to the same paradigm it has in place for congestion already discussed.

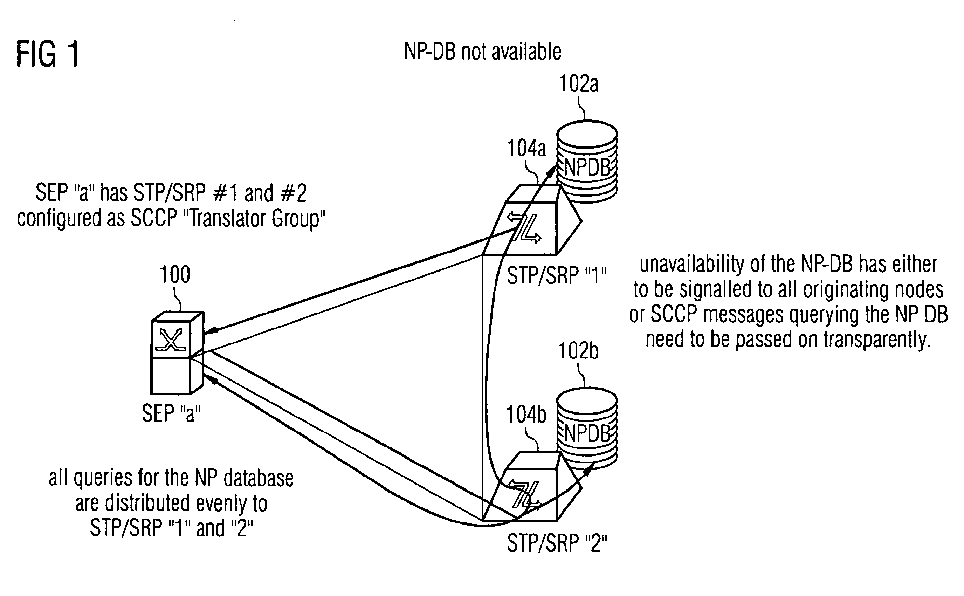

The situation is shown in Figure 1, wherein a call center 100, which may be an electronic world wide switching device (EWSD), initiates an inquiry, in this case a number of inquiries that are evenly distributed to the NP databases 102a and 102b in an SCCP protocol environment routed over a respective packet switch called signal transfer points STP/SRP devices 104a, 104b, which serve as the respective NP servers. An STP routes each incoming message to an outgoing signaling link, in this case to the respective NP databases, based on routing information contained in the SS7 message.
In accordance with the above-described SCCP protocol, in the case that the NP servers are overloaded, an appropriate SCCP error message is generated and sent back to the originating node, namely the call center 100.

Due to this, the call center 100 must analyze and redistribute the inquiry to other NP databases, which takes critical time away from connecting the call. Not to mention that the return error message may be held up for network reasons. All this delays the call set up time for all calls, until the originating node has become aware of the situation and properly redistributes the traffic. As a result, the increase in call set up time is noticeable. To compound the problem, the originating node could also suffer from the fact that its total communication capacity towards the NP servers is sharply dropping, potentially causing congestion on remaining SS7 links, thereby possibly disrupting other call set up times. Thus, the present method proscribed by the standard is inadequate.

What is needed is a procedure that handles congestion in a better manner than that already provided by the SCCP standard. However, the standard must be abided too. Therefore, what is needed is a solution that improves on the SCCP standard for handling congestion, yet at the same time does not interfere with the standard. Thus far there has been no such solution.

US Patent 6,137,806 describes an intelligent network comprising a plurality of Service Signalling Points (SSP) and a Service Control Point (SCP), improved handling of overload conditions at the Service Control Point is provided by means of a Network Signalling Point interposed between the SSPs and the SCP. However, this patent does not describe how to handle NP inquiry overloads.

### OBJECTS & SUMMARY OF THE INVENTION

An object of the invention is to provide transparent handling of an inaccessible NP database.

Another object of the invention is to maintain the current SCCP protocol.

As an additional feature, the present invention provides a message that includes control parameters that cause the NP servers to switch NP databases.

The key to the proposed improvement of the above described procedure is the fact that only the NP database of the NP server is inaccessible, whereas all external communication based on SCCP is still working. Managing congestion of one of a plurality of NP databases of an SCCP system is provided. A message is sent from a node on an SCCP side to a server on an NP side initiating an inquiry to obtain NP information. A current NP database is detected as overloaded with inquires to obtain NP information. The SCCP message is routed from the NP server to an alternate NP server.

The advantage of the proposed solution is the fact that inaccessibility of the NP database no longer needs to be signaled to all the potential originator nodes. No message needs to be retransmitted by the originator. Therefore the delay is expected to be noticeable. Especially the originating nodes do not face SS7 link congestion, especially when the response is sent via the original path.

### BRIEF DESCRIPTION OF THE DRAWINGS

The following figures illustrate at least one example of the present invention:
Fig. 1 illustrates the prior art;
Fig. 2 illustrates the present invention; and
Fig. 3 illustrates the message of the present invention.

### DETAILED DESCRIPTION OF THE PREFERRED EMBODIMENTS

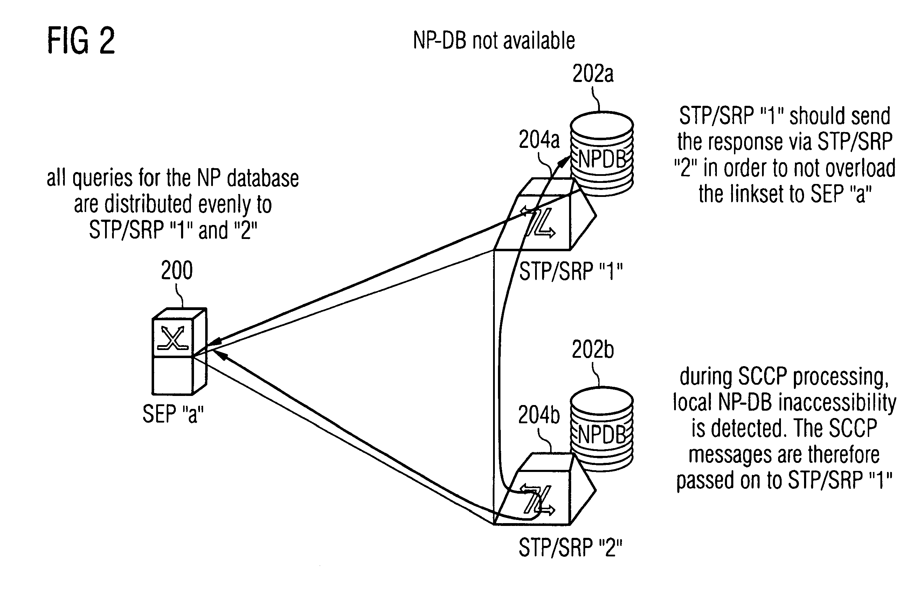

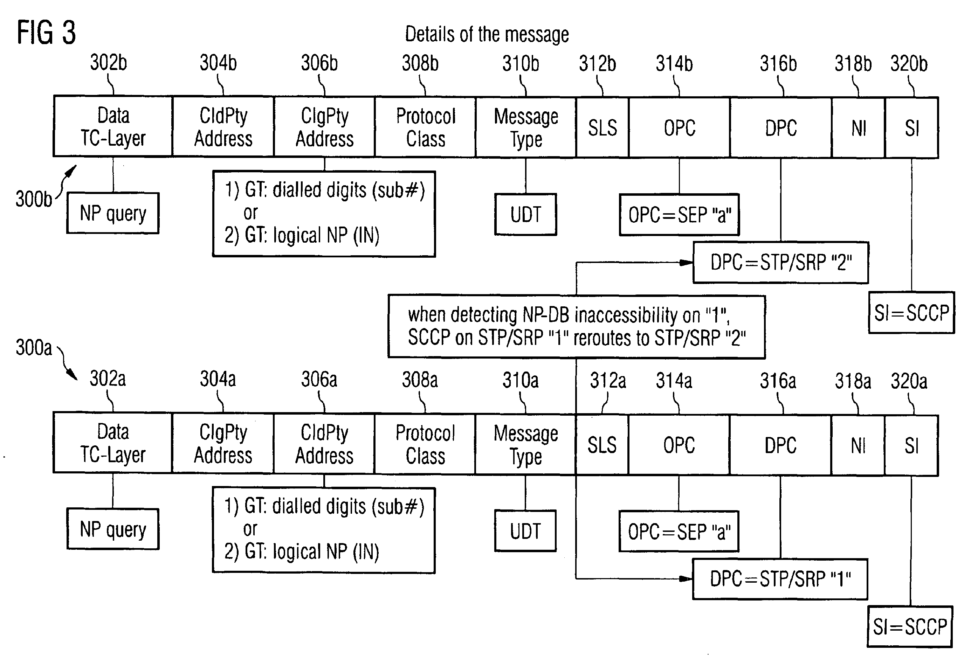

Now with reference to Fig. 2, the present invention will now be described, wherein a switch 200 signals NP databases 202a, b respectively via NP servers 204a, b. The invention causes the NP databases to be switched at the NP server side by way of a unique message, to be discussed with reference to Fig. 3. Thus, the switching is transparent to the SCP side, thereby not affecting the SCCP standard for controlling congestion.

Now in operation, the switch 200, in response to a call set up request of a subscriber, initiates an inquiry to search the NP database 202a to the corresponding NP server 204a. In the case that the NP database 202a access is overloaded, due to other inquiries, the NP server 204a send the overload response to another NP server, here 204b, i.e., rather than back to the switch 200 as in the old method. In case the alternate NP database 202b is overloaded, the corresponding NP server 204a sends the response to a third NP server, and so on, until an NP database that is free 3 found. In this manner, the handling of the congestion of an NP database is completely transparent to the SCCP side.

Now with respect to Fig. 3, there will be explained the SCCP message of the present invention. As already explained, the invention creates a unique SCCP message for handling congestion of an NP database transparently.

Here there is shown two SCCP messages 300a, 300b corresponding to the NP databases (202a, 202b) illustrated in Fig. 2. These SCCP messages follow the proscribed standard SCCP message format. Messages 300a, 300b comprise a data TC-layer part 302a,b, which provides data for the TC Layer (Transaction Capabilities Layer). It is a means based upon the OSI Reference Model to support applications in telecommunications networks. Protocol functions and procedures that control non-circuit related information exchange among signaling points in SS7 networks. It provides a general purpose approach to the introduction of new services within a network as well as a framework for service architecture for providing internet work services. Transaction capabilities includes the application layer protocol called transaction capabilities application part (TCAP) as well as the supporting Presentation, Session, and transport layers called the application service part (ASP).

ClgPty Calling Party Address 304a,b is the calling party address and the cldpty address is the called party address 306b. The called party address may include the GT (Global Title) dialed digits or GT logical NP (Number Portability. The global title is a "logical" or "virtual" address used for routing singaling system no. 7 (SS7) messages using signalling connection control part (SCCP) capabilities. To complete message routing, a GT must be translated to a SS7 point code and subsystem number.

The Protocol Class 308a,b defines the class for the protocol.

The Message Type UDT 310 a,b defines a message type, an assigned value used to identify the feature generating the message. The SLS 312a,b defines a Signalling Link Selection field, which is a field of the routing label that is typically used by the message routing function to perform load sharing among different signaling links or link sets.

The OPC (Originating Point Code) 314a,b is a part of the routing label in a signaling message that uniquely identifies the originating point of that signaling message in asignaling network. The DPC 316a,b defines the destination point code and the NI 318a,b defines the Network Indicator. The Si 320a,b indicates the Service Indicator

In the present invention, however, the DPC 316a of the original message 300a is modified by the NP server 204 a to include the alternate control parameter that causes the message to be routed to the second NP server 204b. Here, the DPC 316a of the original message 300a is charged from DPC=STP/SRP " / ", which names the first NP database 202a to DPC= STP/SRP "2", naming the second NP database 202b.

As a result, the message is routed to the second NP database 202b and processed. The invention maintains the originating node control parameter 314a, namely OPC= Sep " o " in the second message.

When the second NP database 202b, or another, is not congested, the corresponding NP server 204a returns the result of the NP search to the originating node, as indicated by the OPC control parameter 314a. In this manner, the originating node does not notice the congestion handling and the NP database result is automatically received by the originating node without redistribution from the SCCP side.

The key to the proposed improvement of the above described procedure is the fact that only the NP database of the NP server is inaccessible, whereas all external communication based on SCCP is still working.

Since the present invention is transparent to the SCCP system, another advantage is that the invention may work in parallel with the current SCCP standard for handling congestion.

## Claims

1. A method for managing congestion of one of a plurality of Number Portability databases (202a) of a Signalling Connection Control Point, abbreviated as SCCP system,
wherein an SCCP message is sent from a node on an SCCP side to a Number Portability NP server (204a) situated on a Number Portability server side initiating an inquiry to obtain Number Portability information, comprising the steps of:
detecting that a current Number Portability database (202a) is overloaded with inquiries to obtain the Number Portability information;
routing the SCCP message from the Number Portability server (204a) situated on the Number Portability side to an alternate Number Portability server (204b).

2. . The method of claim 1, further comprising the step of inserting on the Number Portability side into the SCCP message a control parameter indicating an alternate NP database (202b).

3. . The method of claim 1, wherein the step of detecting further comprises the step of receiving from the currents Number Portability database (202a) an overload condition by the Number Portability server (204a).

4. . The method of claim 1, further comprising the step of routing the message from a last Number Portability server (204a) to another Number Portability server (204b) until a corresponding Number Portability database (202a) is not overloaded.

5. . An apparatus for managing congestion of one of a plurality of Number Portability databases (202a, b), comprising:
- an SCCP system, including an Number Portability database for providing Number Portability information;
- an Number Portability number server that obtains the Number Portability information in response to a Number Portability inquiry; corresponding to a related original dialed call;
wherein the Number Portability server (204a) routes the inquiry to another Number Portability server (204b) when the Number Portability database (202a) is overloaded with inquiries.

6. . The apparatus of claim 5, further comprising:
- an SCCP server (200) for generating the Number Portability inquiry.

7. . The apparatus of claim 5, wherein the Number Portability inquiry is an SCCP message, wherein the Number Portability server (204a) inserts an address of the alternate Number Portability server (204b) into the SCCP message.

## Patentansprüche

1. Verfahren zum Verwalten von Blockierung einer einer Mehrzahl von Rufnummernportierbarkeitsdatenbanken (202a) eines SCCP-Systems (Signalling Connection Control Point - Steuerteil für Zeichengabeverbindung), wobei eine SCCP-Nachricht von einem Knoten auf einer SCCP-Seite zu einem auf einer Rufnummernportierbarkeitsserverseite zu einem NP-Server (Rufnummernportierbarkeit) (204a) gesendet wird, die eine Anfrage zum Erhalten von Rufnummernportierbarkeitsinformationen einleitet, mit folgenden Schritten:
Erkennen, daß eine gegenwärtige Rufnummernportierbarkeitsdatenbank (202a) mit Anfragen zum Erhalten der Rufnummernportierbarkeits-informationen überlastet ist;
Leiten der SCCP-Nachricht von dem auf der Rufnummernportierbarkeitsseite befindlichen Rufnummernportierbarkeitsserver (204a) zu einem alternativen Rufnummernportierbarkeitsserver (204b).

2. Verfahren nach Anspruch 1, weiterhin mit dem Schritt des Einfügens auf der Rufnummernportierbarkeitsseite in die SCCP-Nachricht eines eine alternative NP-Datenbank (202b) anzeigenden Steuerungsparameters.

3. Verfahren nach Anspruch 1, wobei der Schritt des Erkennens weiterhin den Schritt des Empfangens von der aktuellen Rufnummernportierbarkeitsdatenbank (202a) eines Überlastzustandes durch den Rufnummernportierbarkeitsserver (204a) umfaßt.

4. Verfahren nach Anspruch 1, weiterhin mit dem Schritt des Leitens der Nachricht von einem letzten Rufnummernportierbarkeitsserver (204a) zu einem anderen Rufnummernportierbarkeitssserver (204b), bis eine entsprechende Rufnummernportierbarkeitsdatenbank (202a) nicht überlastet ist.

5. Vorrichtung zum Verwalten von Blockierung einer einer Mehrzahl von Rufnummernportierbarkeitsdatenbanken (202a, b), mit Folgendem:
- einem SCCP-System mit einer Rufnummernportierbarkeitsdatenbank zum Bereitstellen von Rufnummernportierbarkeitsinformationen;
- einem Rufnummernportierbarkeitsserver, der die Rufnummernportierbarkeitsinformation als Antwort auf eine Rufnummernportierbarkeitsanfrage entsprechend einer verwandten ursprünglich gewählten Verbindung erhält;
wobei der Rufnummernportierbarkeitsserver (204a) die Anfrage zu einem weiteren Rufnummernportierbarkeitsserver (204b) leitet, wenn die Rufnummernportierbarkeitsdatenbank (202a) mit Anfragen überlastet ist.

6. Vorrichtung nach Anspruch 5, weiterhin mit Folgendem:
- einem SCCP-Server (200) zum Erzeugen der Rufnummernportierbarkeitsanfrage.

7. Vorrichtung nach Anspruch 5, wobei die Rufnummernportierbarkeitsanfrage eine SCCP-Nachricht ist, wobei vom Rufnummernportierbarkeitsserver (204a) eine Adresse des alternativen Rufnummernportierbarkeitsservers (204b) in die SCCP-Nachricht eingefügt wird.

## Revendications

1. Procédé de gestion de l'encombrement d'une base de données parmi une pluralité de bases de données de portabilité de numéros (202a) d'un système SCCP (abrégé de "point de commande de connexion de signalisation"),
dans lequel un message SCCP est envoyé d'un noeud sur un côté SCCP vers un serveur NP de portabilité de numéros (204a) situé sur un côté de serveur de portabilité de numéros, initiant une requête pour obtenir une information de portabilité de numéros, comprenant les étapes consistant à :
détecter qu'une base de données de portabilité de numéros courante (202a) est surchargée de requêtes d'obtention de l'information de portabilité de numéros ;
router le message SCCP du serveur de portabilité de numéros (204a) situé sur le côté de portabilité de numéros vers un serveur de portabilité de numéros alternatif (204b).

2. Procédé selon la revendication 1, comprenant, en outre, l'étape d'insertion dans le message SCCP, sur le côté de portabilité de numéros, d'un paramètre de commande indiquant une base de données NP alternative (202b).

3. Procédé selon la revendication 1, dans lequel l'étape de détection comprend, en outre, l'étape de réception par le serveur de portabilité de numéros (204a), depuis la base de données de portabilité de numéros courante (202a), d'une condition de surcharge.

4. Procédé selon la revendication 1, comprenant, en outre, l'étape de routage du message d'un dernier serveur de portabilité de numéros (204a) vers un autre serveur de portabilité de numéros (204b) jusqu'à ce qu'une base de données de portabilité de numéros correspondante (202a) ne soit pas surchargée.

5. Dispositif de gestion de l'encombrement d'une base de données parmi une pluralité de bases de données de portabilité de numéros (202a, b), comprenant :
- un système SCCP incluant une base de données de portabilité de numéros pour fournir une information de portabilité de numéros ;
- un serveur de portabilité de numéros qui obtient l'information de portabilité de numéros en réponse à une requête de portabilité de numéros correspondant à un appel composé original associé ;
dans lequel le serveur de portabilité de numéros (204a) route la requête vers un autre serveur de portabilité de numéros (204b) lorsque la base de données de portabilité de numéros (202a) est surchargée de requêtes.

6. Dispositif selon la revendication 5, comprenant, en outre :
- un serveur SCCP (200) pour générer la requête de portabilité de numéros.

7. Dispositif selon la revendication 5, dans lequel la requête de portabilité de numéros est un message SCCP, dans lequel le serveur de portabilité de numéros (204a) insère une adresse du serveur de portabilité de numéros alternatif (204b) dans le message SCCP.
